# EUROPEAN PATENT SPECIFICATION

(11) **EP 3 085 217 B1**
(45) Date of publication and mention of the grant of the patent: **16.03.2022**
(21) Application number: 16162127.1
(22) Date of filing: 24.03.2016
(51) Int. Cl.: A01B 59/042, B62D 13/00, A01B 69/00

(54) **A TOWABLE DEVICE AND CONTROL SYSTEM OF A TOWABLE DEVICE**
ZIEHBARE VORRICHTUNG UND SYSTEM ZUR STEUERUNG EINER ZIEHBAREN VORRICHTUNG
DISPOSITIF REMORQUABLE ET SYSTÈME DE COMMANDE D'UN DISPOSITIF REMORQUABLE

(30) Priority: 01.04.2015 FI 20155235
(43) Date of publication of application: 26.10.2016
(73) Proprietor: Agronic Oy, 86600 Haapavesi (FI)
(72) Inventor: KURONEN, Urpo, 86600 Haapavesi (FI)
(74) Representative: Berggren Oy

(56) References cited:
- DE-U1-202011 003 521
- US-A1- 2004 217 575
- US-A1- 2009 032 273

## Description

The invention relates to a towable device, which has connection elements for articulated connecting to a towing device, at least one turning tyre and steering system comprising a control unit, a sensor for measuring a variable used as the basis for the steering, and an actuator guided by the control unit for turning said tyre. The invention further relates to a steering system of a towable device.

In farming lots of different kinds of trailers towed by tractors are used. Towable trailers have one or several axles with tyres mounted on bearings at their ends, on which the trailer moves on the ground. Trailers are connected to the tractor by means of a tow bar. In order to make the trailer follow the route of the tractor especially in tight turns, trailers are often provided with turning wheels and wheel steering systems. The steering system recognises the direction of motion of the tractor and turns the wheels to the correct direction of travel on the basis of it. With turnable wheels the steerability of a tractor and trailer combination can be significantly improved and the wear of tyres can be reduced especially when using trailers with several axles.

Mechanically operating steering systems comprise rigid articulated rods and/or wires, by means of which the turning mechanism of the wheels of a trailer is connected to the tractor. The change of angle of the longitudinal direction of the tractor and the longitudinal direction of the trailer caused by the turning of the tractor makes the articulated rods and/or wires of the steering system to move and turn the tyres of the trailer. The problem of these kinds of solutions is that, in addition to the turning motion occurring on the plane of the tractor, the articulated rods and wires also react to the banking of the tractor about a longitudinal or transversal axis when driving straight. When moving on uneven terrain this causes unnecessary turning of the trailer wheels.

Document US2009/0032273 discloses a hydraulic steering system of trailer wheels, which can comprise several sensors arranged to a tractor or trailer and measuring several variables, the sensors being connected to an electronic control unit. The trailer has at least one steerable wheel, which is turned by a hydraulic cylinder. The operation of the hydraulic cylinder is controlled by the control unit on the basis of variables measured by a sensor. In the document, especially the turning angle of the tractor's front wheels is mentioned as a variable used in defining the steering of the trailer wheels, the size of which is measured by a rotary sensor.

The control mechanism of a trailer disclosed in the document US2009/0032273 is complicated, and in practice it requires that sensors be mounted also to the tractor. Thus a steerable trailer cannot be towed by such tractors that do not have sensors required by the steering system.

It is an object of the invention to introduce a towable device and steering system of a towable device, with which drawbacks related to the prior art can be eliminated. The objects of the invention are achieved by a towable device and steering system, which are characterised in what is disclosed in the independent claim.

Some
advantageous embodiments of the invention are disclosed in the dependent claims.

The object of the invention is a towable device, which has connection elements for an articulated connection to a towing device, at least one turning tyre, and a steering system. The articulated connection means here that the connection between the towable device and the towing device is not rigid, but rotation can occur in the point of connection. When the towable device is connected to the towing device, an angle is generated between the longitudinal directions of the devices, as the towing device changes its direction of travel. The steering system comprises a control unit, a sensor for measuring a variable used as the basis for the steering, and an actuator guided by the control unit for turning the tyre of the towable device. In the invention the sensor is arranged to measure the variable dependent on the mutual position of the towing device and the towable device. The tyres of the towable device are turned to the desired direction, when this variable changes. The steering system further comprises a flexible connection piece with torsional rigidity, which has a first end for attaching to the towing device and a second end connected to the towable device. The sensor is arranged to the first or second end of the connection piece. The flexible connection piece makes possible an easy attachment of the connection piece to the towing device.

In an advantageous embodiment of the towable device of the invention said sensor is a rotary sensor, which is arranged to measure the angle between the longitudinal direction of the towing device and the longitudinal direction of the towable device. Information of the change of the angle between the longitudinal directions of the devices is transmitted to the rotary sensor by means of the connection piece. The torsional rigidity of the connection piece makes it possible to transmit the information of the change of the angle to the rotary sensor by means of a mechanical connection.

In a second advantageous embodiment of the towable device of the invention said sensor is arranged rotatably to the second end of the connection piece, and the device has a limiter for restricting the rotation of the second end of the connection piece. The second end of the connection piece is able to rotate freely on an area defined by the limiter, and the sensor measures the rotational angle of the second end. The limiter prevents excessive rotation of the connection piece, which could damage the sensor. Without the limiter excessive rotation would be possible, when the connection piece is not attached from its first end to the towing device.

In a third embodiment of the towable device of the invention the first or the second end of the connection piece is connected to the rotary sensor rotatably about an axis, which is substantially perpendicular to the longitudinal direction and the transversal direction of the towable device. The longitudinal direction of the towable device is typically the direction of travel of the device and the transversal direction is the direction of the rotating axis of the wheels of the device. These directions define the direction of the plane of the device. In an operating condition the device moves on the ground surface so that the direction of the plane of the device is substantially identical with the direction of the ground surface. In this case there occurs rotation in the connection point of the towing device and the towable device about the rotating axis, which is substantially perpendicular to the plane of the device, when the direction of travel of the towing device changes. When the second end of the connection piece rotates about an axis substantitially parallel to the rotating axis travelling through the connection point of the devices, the sensor measures in a detailed manner the angle between the towing device and the towable device.

In yet another advantageous embodiment of the towable device of the invention there is provided a quick coupling at the first end of the connection piece, the quick coupling being attachable to the towing device with torsional rigidity. Due to the rigid joint of the first end of the connection piece, rotation of the connection piece can only occur at the second end of the connection piece in an operating situation.

In yet another advantageous embodiment of the towable device of the invention said device is a distance gauge, which is arranged to measure the distance between the first end and second end of the connection piece. As the angle between the longitudinal directions of the towable device and towing device changes, also the distance between the first end of the connection piece attached to the towing device and the second end of the connection piece attached to the towable device changes. By means of this change in distance it is possible to computationally define the angle between the longitudinal directions of the devices.

In yet another advantageous embodiment of the towable device of the invention said actuator for turning said tyre is a hydraulic cylinder, which can be connected to the hydraulic system of the towing device by hydraulic hoses. The hydraulic cylinder used for turning the tyres thus obtains the necessary pressure for the hydraulic liquid from the hydraulic system of the towing device.

In yet another advantageous embodiment of the towable device of the invention said connection elements for connecting to the towing device comprise a tow bar, at the end of which there is a towing eyelet, and the second end of the connection piece is connected to the tow bar, preferably close to the towing eyelet. The towable device can be a trailer to be towed with a tractor, the towing eyelet of which can be fitted to the tractor's towing hook.

The steering system of the towable device, which is not an object of the invention,
comprises a control unit a sensor for measuring a variable used as the basis for the steering and a control unit for guiding the actuator turning the tyre. The sensor can be adapted to measure a variable dependant on the mutual position of the towing device and the towable device, and the steering system further comprises a flexible connection piece with torsional rigidity, the connection piece having a first end for attaching to the towing device and a second end for attaching to the towable device. The sensor can be arranged either to the first or second end of the connection piece. When the sensor is arranged to the second end of the connection piece, i.e. to the end to be attached to the towable device, all parts belonging to the steering system can be placed to the towable device. The sensor can be a part fixedly attached to the connection piece, or it can be a separate part, which is attachable to the connection piece and the towable device.

In an example of the steering system said sensor is a rotary sensor, which can be adapted to measure the angle between the longitudinal direction of the towing device and the longitudinal direction of the towable device.

In a second example of the steering systemthe
sensor is arranged rotatably to the second end of the connection piece, said second end having a limiter for limiting the rotation of the second end of the connection piece. Preferably at the first end of the connection piece there is a quick coupling, which can be attached to the towing device with rotational rigidity.

In a third example of the steering system said sensor is a distance gauge, which is arranged to measure the distance between the first end and second end of the connection piece.

In yet another example of the steering system the connection piece is a thick-walled tube made of a substantially elastic material. The tube can be reinforced with fibre, and its wall can comprise layers, which can be made of different materials, such as rubber and plastic. A tube suitable for a connection piece is a flexible hydraulic oil tube used in working machines. The connection piece may also be a wire with torsional rigidity or a wire surrounded by a tubular shell.

It is an advantage of the invention that the mechanical connection between the towing device and sensor realized by a flexible connection piece with torsional rigidity does not react to the pitching or banking of the towing device and/or towable device so that the unnecessary turning of the wheels of the towable device is avoided.

It is further an advantage of the invention that connecting the elastic and flexible connection piece to the towing device is considerably simpler than connecting rigid articulated rods or wires.

It is still an advantage of the invention that the steering system endures loads and impacts caused by external objects better than a mechanism consisting of rigid articulated rods or wires. Further, no clearance caused by mechanical wear, which would weaken the operation of the system is generated to the steering system. Thus the invention retains its operational condition well also in situations of use subjecting to hard mechanical stress.

The invention is next explained in more detail, referring to the attached drawings in which
Figure 1 illustrates in an exemplary manner a towable device connected to a towing device, seen from above,
Figures 2a and 2b illustrate in an exemplary manner a part of a towable device of the invention seen from different directions,
Figure 2c illustrates in an exemplary manner an alternative way for attaching the towable device to the towing device, and
Figures 3a and 3b illustrate in an exemplary manner a part of the steering system of
   a towable device of the invention seen from different directions.

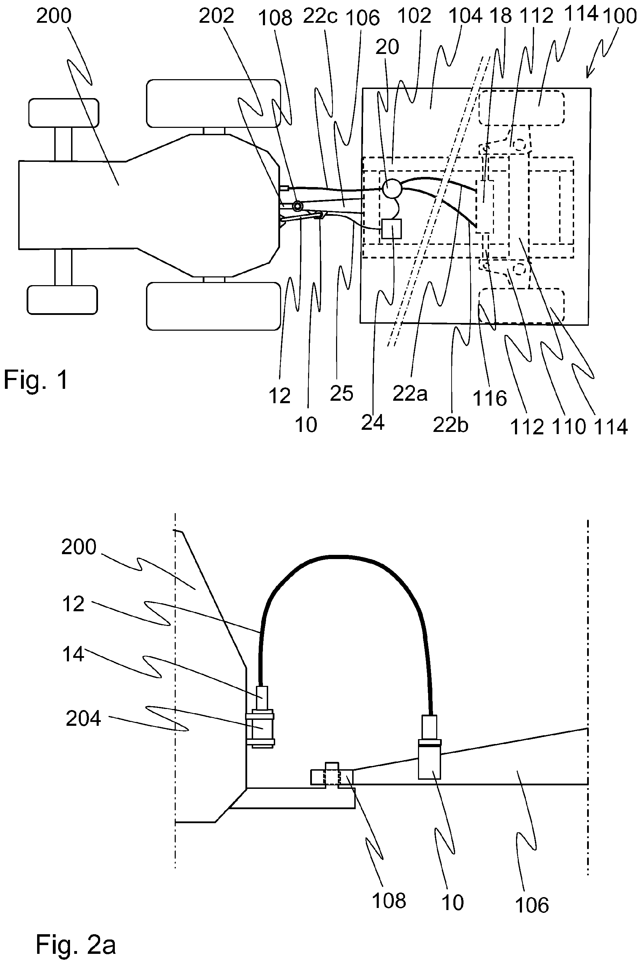

In Figure 1 there is shown in an exemplary manner a towable device of the invention, seen from above. The towable device illustrated in the figure is a trailer 100, and it is connected to a tractor 200 acting as a towing device. The trailer has a body 102 consisting of steel beams, on which there is a flatbed 104. At the first end of the body there is provided a tow bar 106, at the free end of which there is a towing eyelet 108. In the figure the body parts remaining under the flatbed are drawn with broken lines. The trailer is connected to the tractor 200 by fitting the towing eyelet to a towing hook 202 of the tractor. The connection achieved by the towing hook and towing eyelet is an articulated connection, which makes possible the rotation of the tractor and trailer in relation to each other about the rotational axis travelling through the towing eyelet.

The longitudinal direction of the tow bar defines the longitudinal direction of the trailer. Close to the second end of the body there is an axle 110 located transversely in relation to the longitudinal direction of the trailer. The axle and the longitudinal direction of the tow bar define the direction of the plane of the trailer. At both ends of the axle there is an L-shaped supporting arm 112 attached in an articulated manner, to the first branch of which there is attached a tyre 114 mounted on a bearing. The second branches of the supporting arms are connected to each other at the ends of an arm 116 protruding from the opposite ends of a turning cylinder 18. The turning cylinder 18 is a double-acting hydraulic cylinder belonging to the steering system of the trailer, inside which the piston and the arm attached to the piston can be moved in the longitudinal direction of the turning cylinder by feeding hydraulic oil into the turning cylinder. Moving the arm makes the tyres 114 of the trailer turn to a desired direction. In Figure 1 the arm of the turning cylinder is in the middle position, in which the tyres of the trailer are in a straight line in relation to the longitudinal direction of the trailer.

The steering system of the trailer further comprises a distributing valve 20, which is connected to the first end of the turning cylinder 18 by a first hydraulic hose 22a, to the second end of the turning cylinder by a second hydraulic hose 22b, and to the hydraulic system of the tractor by a third hydraulic hose 22c. The operation of the distributing valve is controlled by an electric automatic control unit 24. The hydraulic oil pressure needed for the operation of the turning cylinder is obtained from the tractor's hydraulic system. At the side of the tow bar, close to the towing eyelet there is attached a rotary sensor 10, which is connected to the control unit 24 with a wire 25, along which the variable measured by the rotary sensor is transmitted to the control unit. The rotary sensor is again connected to the back side of the tractor 200 by the connection piece 12.

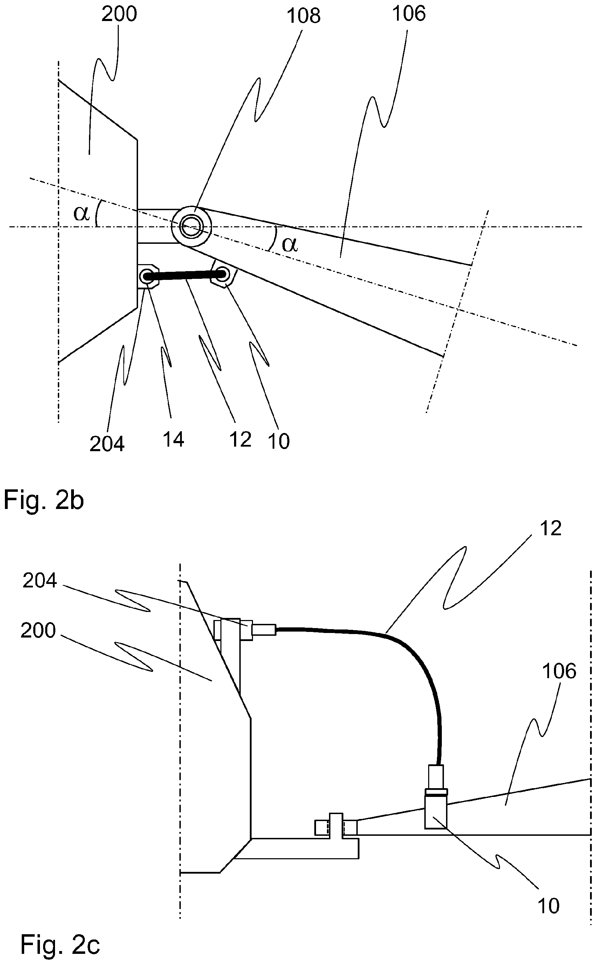

When the tractor 200 is used for towing the trailer 100, the trailer follows the movement of the tractor. When driving straight, the longitudinal direction of the tractor and the longitudinal direction of the trailer are parallel. When the direction of travel of the tractor changes, an angle α (Figure 2b) is generated between the longitudinal direction of the trailer and the longitudinal direction of the tractor, of which the term steering angle is used in this description. The rotary sensor 10 attached to the trailer measures the value of the steering angle and the control unit 24 calculates the turning need of the tyres of the trailer automatically on the basis of the measured steering angle and guides the distributing valve 20 to let hydraulic oil to the turning cylinder 18 so that the tyres 114 turn in a desired manner. In the memory of the control unit there is a suitable software for calculating the turning need of the tyres and controlling the operation of the distributing valve.

Figure 2a illustrates in an exemplary manner the part of the trailer shown in Figure 1 seen from the side, and Figure 2b illustrates the same part seen from above. At the first end of the connection piece 12 there is a quick coupling 14, which can be attached in a non-rotating manner to a chuck 204 at the back of the tractor 200. The connection piece is connected from its second end to the side of the trailer's tow bar 106, to the rotary sensor 10 attached close to the towing eyelet 108. In Figure 2a, the chuck 204 and the rotary sensor are in a substantially perpendicular direction in relation to the plane of the trailer so that both ends of the connection piece also adopt a perpendicular position in relation to the plane of the trailer. The connection piece is a flexible part with torsional rigidity, which in an unloaded condition positions itself to a substantially straight shape, but which can be bent to the curved shape shown in Figure 2a. Preferably the connection piece is a thick-walled flexible tube. Some suitable tubes are, for example, hydraulic oil tubes made of synthetic rubber, reinforced with spiral-shaped steel web, the outer diameter of which is 30 mm and the inner diameter 19 mm, but also tubes of other shapes and sizes are possible. It is important that the connection piece is substantially torsionally rigid, i.e. the rotational movement of the first end of the connection piece is transmitted in substantially the same extent to the second end of the connection piece.

When the direction of travel of the tractor 200 changes, a steering angle α is generated between the longitudinal direction of the tractor and the longitudinal direction of the trailer. The first end of the connection piece is attached in a rotationally rigid manner to the chuck in the tractor, so that it rotates along with the tractor. The rotational movement of the first end of the connection piece is transmitted to the second end of the connection piece and further to the rotary sensor 10. The control unit registers the change in the steering angle measured by the rotary sensor and, on the basis of it, gives the necessary guide commands to the distributing valve 20 for turning the wheels of the trailer.

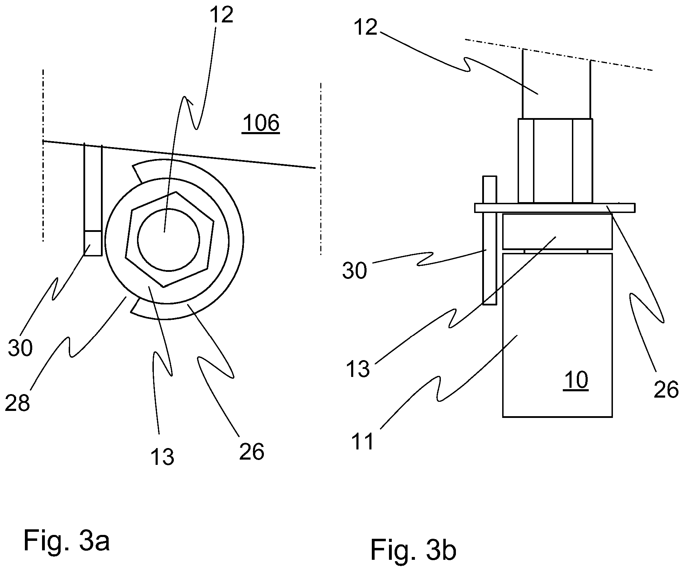

In Figure 2c there is illustrated an alternative way for connecting the connection piece 12 shown in Figures 1, 2a and 2b to the tractor 200. In the connection method illustrated in Figure 2c the chuck 204 is attached to the back of the tractor so that it is substantially in the longitudinal direction of the tractor. In this case, the first end of the connection piece 12 to be attached to the chuck is also positioned substantially to the longitudinal direction of the tractor. The rotary sensor 10 attached to the tow bar 106 of the trailer and the second end of the connection piece attached to it are in a perpendicular position in relation to the plane of the trailer. The steering system of the trailer functions also with this attachment method of the connection piece substantially in the same way as has been disclosed in the description in Figures 2a and 2b. Changing the direction of travel of the tractor turns the first end of the connection piece to the longitudinal direction of the tractor so that the second end of the connection piece rotates about the rotating axis of the rotary sensor. In order to make the steering system work also with this attachment method of the connection piece, the connection piece has to have sufficient flexural rigidity and it has to aim at adopting a straight position in the unloaded condition. Connection pieces with sufficient torsional rigidity usually always have the sufficient flexural rigidity required by this attachment method. Figure 3a illustrates in an exemplary manner a part of a steering system of a towable device of the invention seen from above and Figure 3b illustrates the same part seen from the side. A rotary sensor 10 comprises a body part 11 and a rotating part 13 attached rotatably to the body part (Figure 3b). The body part has a detector, which identifies in which position the rotating part is rotated in relation to the body part. The body part and the rotating part can be encased inside a common casing structure. The second end of the connection piece 12 is attached to the rotating part so that the rotation of the second end makes the rotating part to rotate. Between the second end of the connection piece and the rotating part there is an annular collar 26, on the outer circumference of which there is an indentation 28 parallel with the circumference. To the side of the tow bar 106 there is attached a pin 30, the free end of which extends to the indentation. The collar 26, the indentation 28 in it and the pin 30 extending to the indentation form a limiter, which limits the rotation of the second end of the connection piece and the rotating part 13 of the rotary sensor attached to it to a section of the same length as the indentation of the rotation. The limiter thus prevents the excessive rotation of the rotating part possible damaging the rotary sensor.

Some advantageous embodiments of a towable device of the invention and a steering system have been explained above. The invention is not restricted to the solutions disclosed above, but the inventional idea can be applied in different ways within limits set by the patent claims.

## Claims

1. Towable device (100), which has connection elements (106, 108) for articulated connection to a towing device (200), at least one turning tyre (114) and a steering system, the steering system comprising a control unit (24), a sensor (10) for measuring a variable used as the basis for the steering, and an actuator (18) guided by the control unit (24) for turning said tyre (114), **characterised in that** said sensor (10) is arranged to measure the variable dependant on the mutual position of the towing device (200) and a towable device (100) and 2. **in that** the steering
system further comprises a flexible connection piece (12) with torsional rigidity, the
connection piece having a first end for attaching to the towing device (200) and a second end connected to the towable device (100), and **in that** said sensor (10) is
arranged to the first or second end of the connection piece (12).

2. Towable device (100) according to claim 1, **characterised in that** said sensor (10) is a rotary sensor, which is arranged to measure an angle α between the longitudinal direction of the towing device (200) and the towable device (100).

3. Towable device (100) according to claim 1 or 2, **characterised in that** the first or second end of the connection piece (12) is connected to the sensor (10) rotatably about an axis, which is perpendicular to the longitudinal direction and the transversal direction of the towable device (100).

4. Towable device (100) according to claim 2 or 3, **characterised in that** said sensor (10) is arranged rotatably to the second end of the connection piece (12) and that the device has a limiter (26, 28, 30) for limiting the rotation of the second end of the connection piece.

5. Towable device (100) according to claim 3 or 4, **characterised in that** at the first end of the connection piece (12) there is provided a quick coupling (14), which quick coupling is attachable to a towing device (200) with rotational rigidity.

6. Towable device (100) according to claim 1, **characterised in that** said sensor (10) is a distance gauge, which is arranged to measure the distance between the first end and the second end of the connection piece (12).

7. Towable device (100) according any of the claims 1-6, **characterised in that** said actuator (18) for turning said tyre (114) is a hydraulic cylinder, which is connectable to the hydraulic system of the towing device (200) with hydraulic hoses (22a, 22b, 22c).

8. Towable device (100) according to any of the claims 1-7, **characterised in that** said connection elements for connecting to the towing device (200) comprise a tow bar (106) with a towing eyelet (108) provided at its end, and that the second end of the connection piece (12) is connected to the tow bar (106).

9. Towable device (100) according to any of the claims 1-8, **characterised in that** the connection piece (12) is a tube with a thick wall, made of substantially elastic material.

10. Towable device (100) according to any of the claims 1-9, **characterised in that** it is a trailer to be towed by a tractor (200).

## Patentansprüche

1. Schleppbare Vorrichtung (100), die Verbindungselemente (106, 108) zur gelenkigen Verbindung mit einer Abschleppvorrichtung (200), mindestens einem drehbaren Reifen (114) und einem Lenksystem aufweist, wobei das Lenksystem eine Steuereinheit (24), einen Sensor (10) zum Messen einer der Lenkung zugrunde gelegten Variable und einen von der Steuereinheit (24) gesteuerten Aktuator (18) zum Drehen des Reifens (114) umfasst, **dadurch gekennzeichnet, dass** der Sensor (10) angeordnet ist, um die Variable zu messen, die von der gegenseitigen Position der Abschleppvorrichtung (200) und einer schleppbaren Vorrichtung (100) abhängig ist, und dass das Lenksystem ferner ein flexibles Verbindungsstück (12) mit Torsionssteifigkeit umfasst, wobei das Verbindungsstück ein erstes Ende zum Befestigen an der Abschleppvorrichtung (200) und ein zweites Ende aufweist, das mit der schleppbaren Vorrichtung (100) verbunden ist, und dadurch, dass der Sensor (10) an dem ersten oder zweiten Ende des Verbindungsstücks (12) angeordnet ist.

2. Schleppbare Vorrichtung (100) nach Anspruch 1, **dadurch gekennzeichnet, dass** der Sensor (10) ein Drehsensor ist, das so angeordnet ist, dass es einen Winkel α zwischen der Längsrichtung der Abschleppvorrichtung (200) und der schleppbaren Vorrichtung (100) misst.

3. Schleppbare Vorrichtung (100) nach Anspruch 1 oder 2, **dadurch gekennzeichnet, dass** das erste oder zweite Ende des Verbindungsstücks (12) mit dem Sensor (10) um eine Achse drehbar verbunden ist, die senkrecht zur Längsrichtung und zur Querrichtung der schleppbaren Vorrichtung (100) ist.

4. Schleppbare Vorrichtung (100) nach Anspruch 2 oder 3, **dadurch gekennzeichnet, dass** der Sensor (10) drehbar an dem zweiten Ende des Verbindungsstücks (12) angeordnet ist, und dass die Vorrichtung einen Begrenzer (26, 28, 30) zum Begrenzen der Drehung des zweiten Endes des Verbindungsstücks aufweist.

5. Schleppbare Vorrichtung (100) nach Anspruch 3 oder 4, **dadurch gekennzeichnet, dass** am ersten Ende des Verbindungsstücks (12) eine Schnellkupplung (14) vorgesehen ist, wobei die Schnellkupplung drehsteif an einer Abschleppvorrichtung (200) anbringbar ist.

6. Schleppbare Vorrichtung (100) nach Anspruch 1, **dadurch gekennzeichnet, dass** der Sensor (10) ein Entfernungsmesser ist, das angeordnet ist, um den Abstand zwischen dem ersten Ende und dem zweiten Ende des Verbindungsstücks (12) zu messen.

7. Schleppbare Vorrichtung (100) nach einem der Ansprüche 1 bis 6, **dadurch gekennzeichnet, dass** der Aktuator (18) zum Drehen des Reifens (114) ein Hydraulikzylinder ist, der mit Hydraulikschläuchen (22a, 22b, 22c) an das Hydrauliksystem der Abschleppvorrichtung (200) anschließbar ist.

8. Schleppbare Vorrichtung (100) nach einem der Ansprüche 1 bis 7, **dadurch gekennzeichnet, dass** die Verbindungselemente zum Verbinden mit der Abschleppvorrichtung (200) eine Abschleppstange (106) mit einer an ihrem Ende vorgesehenen Abschleppöse (108) umfassen, und dass das zweite Ende des Verbindungsstücks (12) mit der Abschleppstange (106) verbunden ist.

9. Schleppbare Vorrichtung (100) nach einem der Ansprüche 1 bis 8, **dadurch gekennzeichnet, dass** das Verbindungsstück (12) ein Rohr mit einer dicken Wand aus im Wesentlichen elastischem Material ist.

10. Schleppbare Vorrichtung (100) nach einem der Ansprüche 1 bis 9, **dadurch gekennzeichnet, dass** sie ein von einem Traktor (200) abzuschleppender Anhänger ist.

## Revendications

1. Dispositif remorquable (100), qui comporte des éléments de liaison (106, 108) pour une liaison articulée à un dispositif de remorquage (200), au moins un pneu tournant (114) et un système de direction, le système de direction comprenant une unité de commande (24), un capteur (10) pour mesurer une variable utilisée comme base pour la direction, et un actionneur (18) guidé par l'unité de commande (24) pour faire tourner ledit pneu (114), **caractérisé en ce que** ledit capteur (10) est agencé pour mesurer la variable en fonction de la position mutuelle du dispositif de remorquage (200) et d'un dispositif remorquable (100) et **en ce que** le système de direction comprend en outre une pièce de liaison flexible (12) ayant une rigidité de torsion, la pièce de liaison ayant une première extrémité pour la fixation au dispositif de remorquage (200) et une seconde extrémité reliée au dispositif remorquable (100), et **en ce que** ledit capteur (10) est agencé sur la première ou la seconde extrémité de la pièce de liaison (12) .

2. Dispositif remorquable (100) selon la revendication 1, **caractérisé en ce que** ledit capteur (10) est un capteur rotatif, qui est agencé pour mesurer un angle α entre la direction longitudinale du dispositif de remorquage (200) et le dispositif remorquable (100).

3. Dispositif remorquable (100) selon la revendication 1 ou 2, **caractérisé en ce que** la première ou la seconde extrémité de la pièce de liaison (12) est reliée au capteur (10) de manière rotative autour d'un axe, qui est perpendiculaire à la direction longitudinale et à la direction transversale du dispositif remorquable (100).

4. Dispositif remorquable (100) selon la revendication 2 ou 3, **caractérisé en ce que** ledit capteur (10) est agencé de manière rotative sur la seconde extrémité de la pièce de liaison (12) et **en ce que** le dispositif comporte un limiteur (26, 28, 30) pour limiter la rotation de la seconde extrémité de la pièce de liaison.

5. Dispositif remorquable (100) selon la revendication 3 ou 4, **caractérisé en ce qu'**au niveau de la première extrémité de la pièce de liaison (12), un raccord rapide (14) est prévu, lequel raccord rapide peut être fixé à un dispositif de remorquage (200) avec rigidité de rotation.

6. Dispositif remorquable (100) selon la revendication 1, **caractérisé en ce que** ledit capteur (10) est un indicateur de distance, qui est agencé pour mesurer la distance entre la première extrémité et la seconde extrémité de la pièce de liaison (12).

7. Dispositif remorquable (100) selon l'une quelconque des revendications 1 à 6, **caractérisé en ce que** ledit actionneur (18) pour faire tourner ledit pneu (114) est un vérin hydraulique, qui peut être relié au système hydraulique du dispositif de remorquage (200) avec des flexibles hydrauliques (22a, 22b, 22c).

8. Dispositif remorquable (100) selon l'une quelconque des revendications 1 à 7, **caractérisé en ce que** lesdits éléments de liaison pour la liaison au dispositif de remorquage (200) comprennent une barre de remorquage (106) avec un oeillet de remorquage (108) prévu à son extrémité, et **en ce que** la seconde extrémité de la pièce de liaison (12) est reliée à la barre de remorquage (106).

9. Dispositif remorquable (100) selon l'une quelconque des revendications 1 à 8, **caractérisé en ce que** la pièce de liaison (12) est un tube à paroi épaisse, réalisé en matériau sensiblement élastique.

10. Dispositif remorquable (100) selon l'une quelconque des revendications 1 à 9, **caractérisé en ce qu'**il s'agit d'une remorque à tracter par un tracteur (200).
